Europäisches Patentamt

**European Patent Office**

Office européen des brevets

(11) Publication number: **0 191 103 B1**

(12) **EUROPEAN PATENT SPECIFICATION**

(45) Date of publication of patent specification: **21.04.93**  (51) Int. Cl.⁵: **G05B 19/407**

(21) Application number: **85902146.1**

(22) Date of filing: **25.04.85**

(86) International application number:
**PCT/JP85/00234**

(87) International publication number:
**WO 85/05198 (21.11.85 85/25)**

(54) **METHOD OF CONTROLLING MULTI-JOINT ROBOT.**

(30) Priority: **27.04.84 JP 86420/84**
**07.05.84 JP 90619/84**

(43) Date of publication of application:
**20.08.86 Bulletin 86/34**

(45) Publication of the grant of the patent:
**21.04.93 Bulletin 93/16**

(84) Designated Contracting States:
**DE FR GB**

(56) References cited:
**DE-A- 2 625 397**
**DE-A- 2 746 886**
**JP-A-57 155 607**
**JP-B-52 188 69**
**US-A- 3 952 238**

(73) Proprietor: **MATSUSHITA ELECTRIC INDUSTRI-AL CO., LTD.**
**1006, Oaza Kadoma**
**Kadoma-shi, Osaka-fu, 571(JP)**

(72) Inventor: **SOJI, Kazuo**
**11-201, 4-chome, Suikouen-cho**
**Hirakata-shi Osaka-fu 573(JP)**
Inventor: **NAGANO, Hiroyuki**
**258-604, 2-chome, Yagumohigashimachi**
**Moriguchi-shi Osaka-fu 570(JP)**

(74) Representative: **Dr. Elisabeth Jung Dr. Jürgen Schirdewahn Dipl.-Ing. Claus Gernhardt**
**P.O. Box 40 14 68 Clemensstrasse 30**
**W-8000 München 40 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

**TECHNICAL FIELD**

The present invention relates to a method for controlling a first arm and a second arm of an articulated robot having two arms.

**BACKGROUND ART**

Recently, by using a microprocessor, a control method of an industrial robot changes to be digitized and to higher characteristics and volocity control of arm is generally made basing on digitizing cam curve and memorizing it, thereby to execute a velocity instruction.

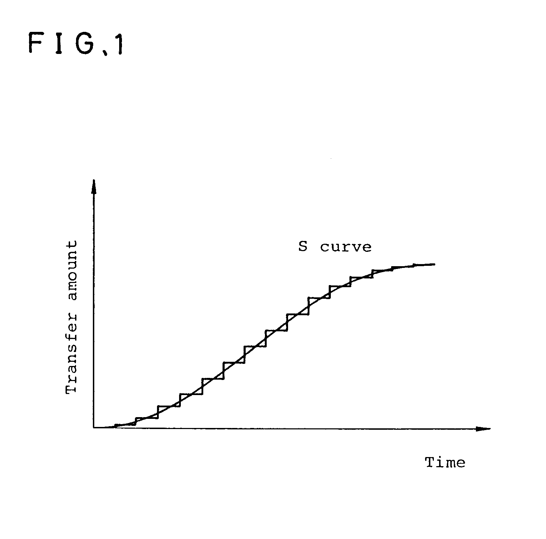

To describe more specifically, the cam curve (S curve) having a relation between a time and a transfer amount as shown in FIG. 1 is digitized and memorized beforehand in a memory device and a desired transfer amount is derived one by one basing on the cam curve at an operational time and a positional deviation against a present position is supplied as a velocity instruction to a motor which drives each arm; contents in the memory device is called S table. In order to make the first arm and the second arm start simultaneously and to stop simultaneously, an instruction value derived from the S table is multiplied by a ratio of a transfer pulse amount of a first motor to a transfer pulse amount of a second motor, thereby to produce an actual issued desired transfer amount.

As another method for supplying the velocity instruction to each motor, such a hybrid control method is known that the cam curve having a relation of the time and the velocity as shown in FIGs.2 and 3 is digitized and memorized in the memory device, and a velocity is derived one by one basing on the cam curve at the operational time, and the control for the transfer amount is executed separately basing on an integrated value of the issued velocity instruction, or another method using a cam curve having a relation of the transfer amount and velocity as shown in FiGs.4 and 5, is known.

Essentially, the articulated robot has such characteristics that a moment of inertia changes largely by an angle of the second arm, and a centrifugal force or Coriolis force changes largely by an angle of the second arm and a movement of the first arm and the second arm. Therefore, a load torque of a motor or a speed reducer changes largely on account of them.

However, in the above-mentioned conventional method, uniform acceleration and deceleration are executed not specially considering the variation of the load and therefore, the load torque under the severest conditions should be made not to exceed a tolerance limit; that is, the uniform acceleration and deceleration are executed against an idle operation and the uniform acceleration and the uniform deceleration are large obstacle against a shortening of the transfer time.

**DISCLOSURE OF THE INVENTION**

The first object of the present invention is to offer a method for controlling an articulated robot, which can control each arm in a manner that the shortest transfer time is realized under such conditions that capabilities of a motor and a driving circuit are made the best use of and a load torque of the speed reducer is not above the tolerance limit.

Another object of the present invention is to offer a method for controlling an articulated robot, which can shorten largely and reasonably the transfer time in comparison with the conventional method which fixes the acceleration and deceleration time.

To achieve the above objects the invention provides a method as defined in claim 1.

**BRIEF DESCRIPTION OF THE DRAWINGS**

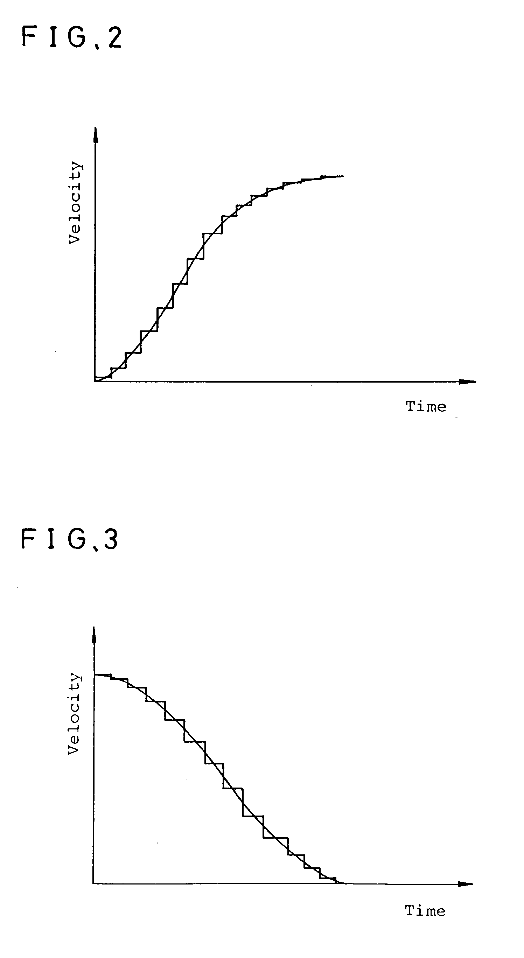

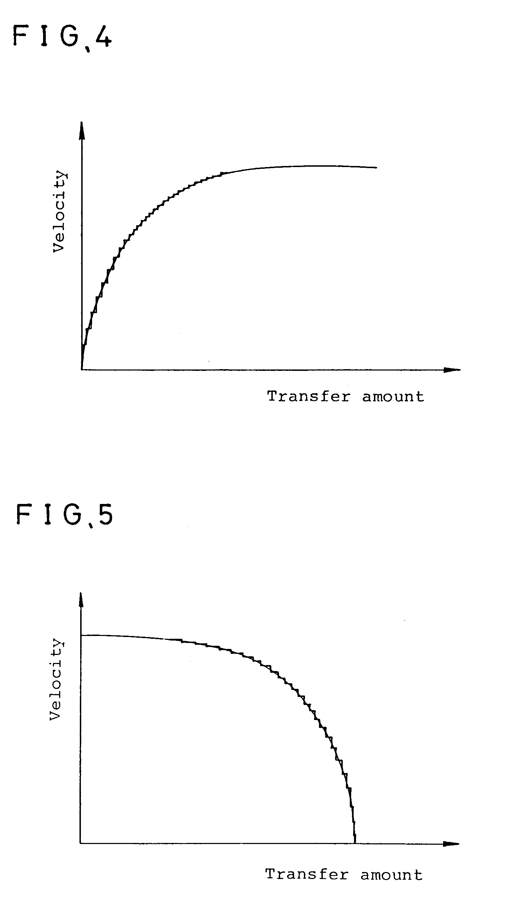

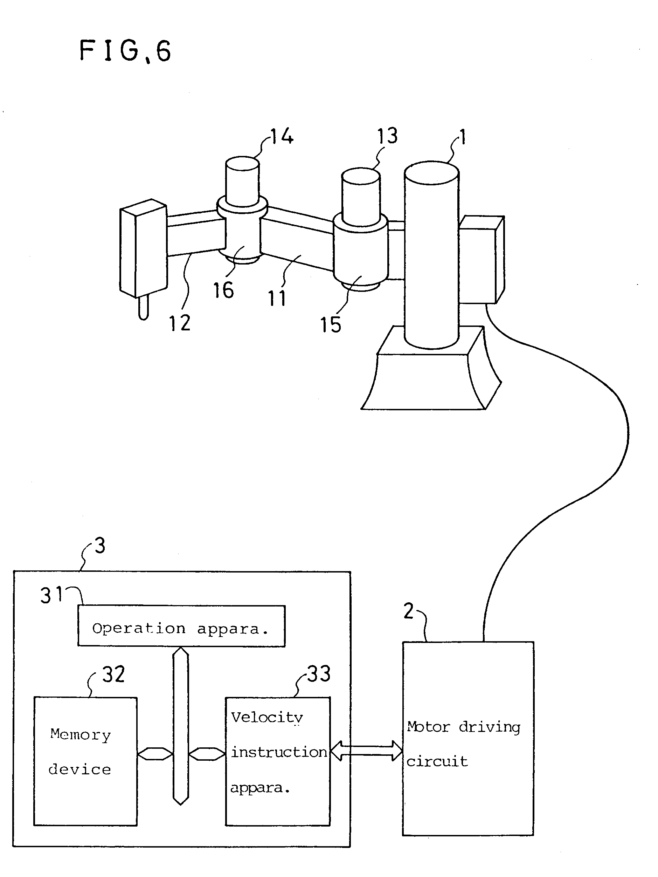

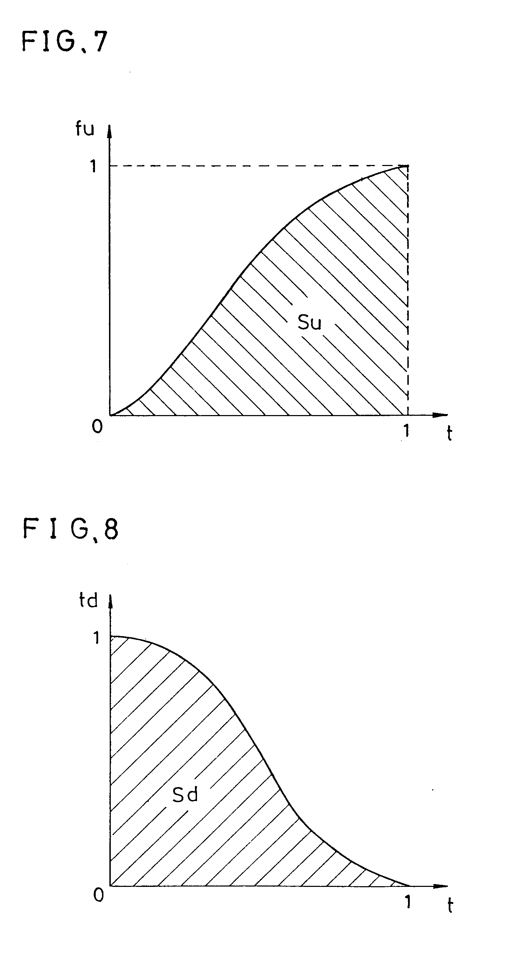

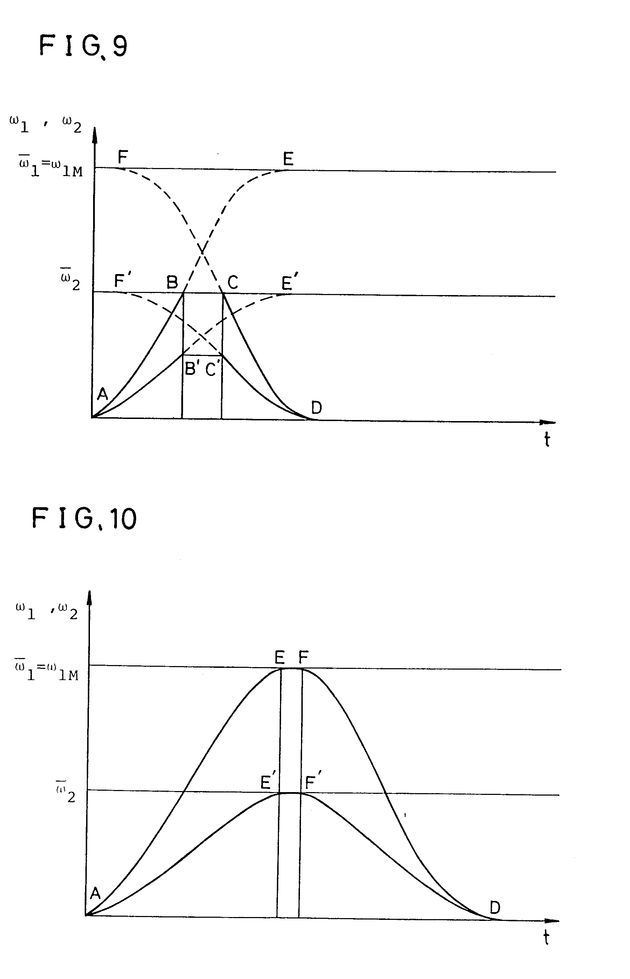

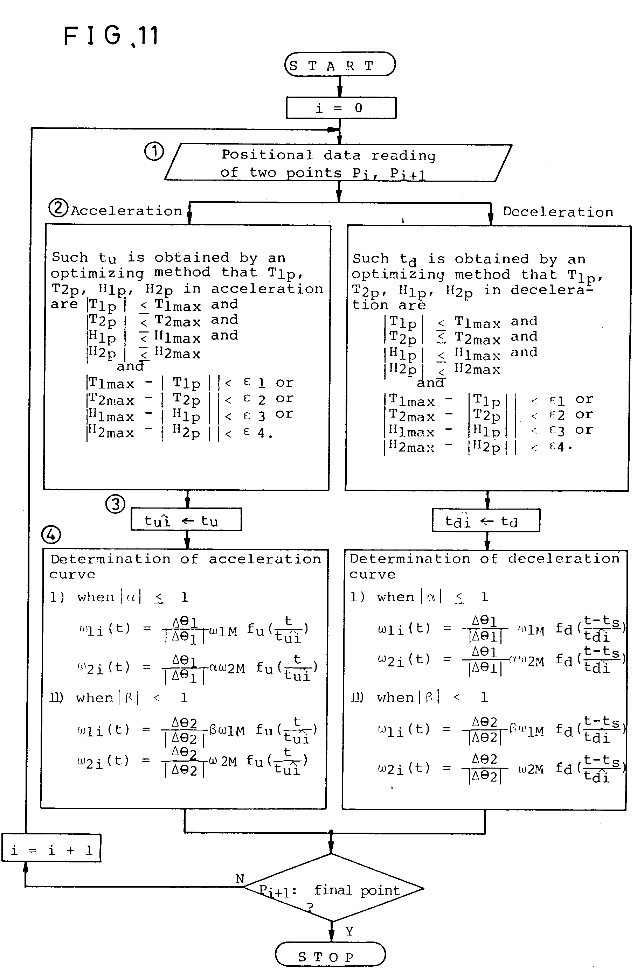

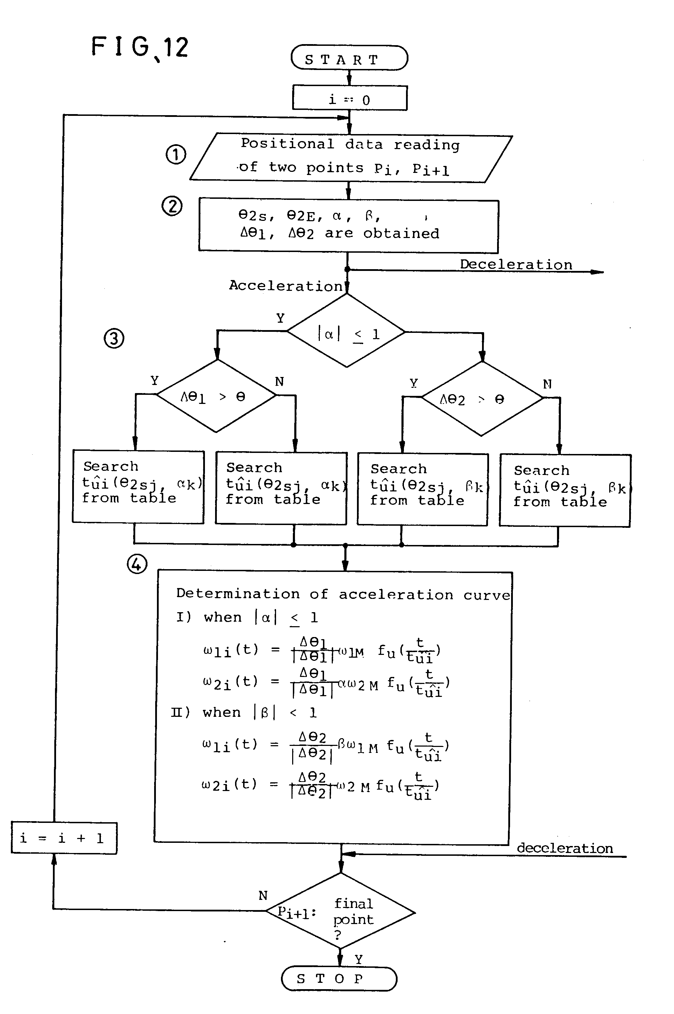

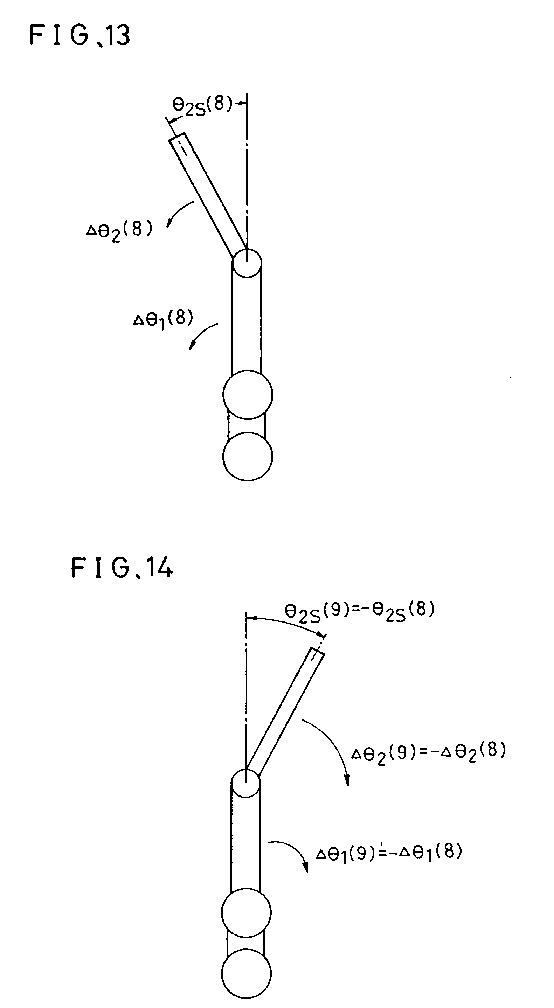

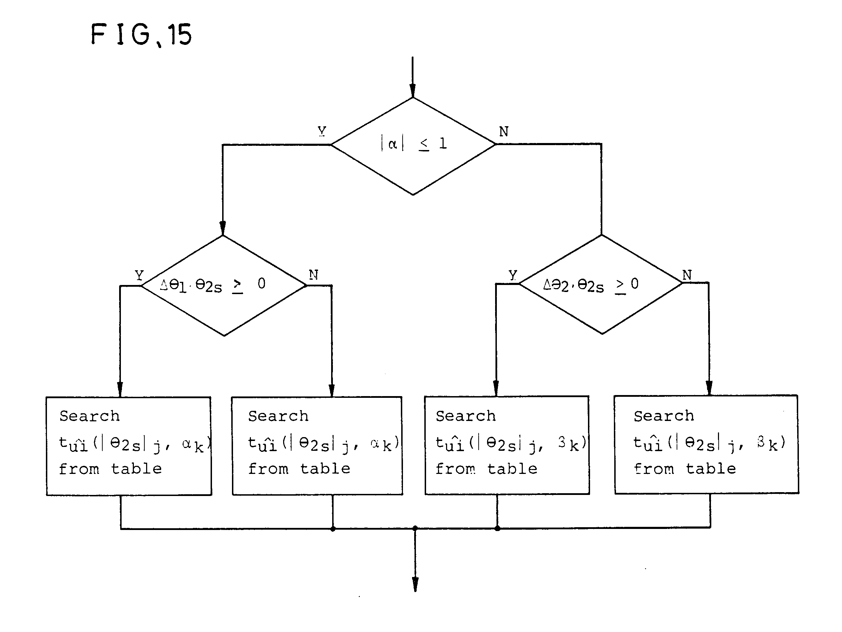

FIG.1 is a cam curve diagram showing a relation between a time and a transfer amount. FIG.2 is an acceleration cam curve showing a relation between a time and a velocity, FIG.3 is deceleration cam curve of the same, FIG.4 is an acceleration cam curve showing a relation between a transfer amount and a velocity, FIG.5 is a deceleration cam curve of the same, FIG.6 is a diagram showing a system composition of articulated robot, FIG.7 is a diagram showing a reference acceleration curve used in the present invention method, FIG.8 is a diagram showing the same deceleration curve, FIG.9 is a diagram showing an angular velocity curve when none of the first motor and the second motor mounts up to the largest rotation number, FIG.10 is a diagram showing a supposed angular curve used at a determining of the acceleration and the deceleration time of FIG.9, FIG.11 is a flow chart of a first embodiment of the present invention, FIG.12 is a flow chart of a second embodiment of the present invention, FIG.13 and FIG.14 are views describing an operation of the robot, FIG.15 is a partial flow chart of a third embodiment of the present invention.

## THE BEST MODE FOR EMBODYING THE PRESENT INVENTIONS

FIG.6 is a diagram showing a system composition of the articulated robot having two arms.

In the figure, numeral 1 is a supporter of a robot body, numeral 11 is the first arm connected rotatably to the supporter 1, numeral 12 is the second arm connected rotatably to the first arm 11, numerals 13 and 14 are motors to drive the first arm 11 and the second arm 12. Numerals 15 and 16 are speed reducers to reduce the rotation of the motors 13 and 14 and transmit them to the first arm 11 and the second arm 12.

Numeral 2 is a driving circuit to drive the motor 13 and 14. Numeral 3 is a numerical control apparatus and comprises an operation apparatus 31, a memory device 32 and a velocity instruction apparatus 33 and produces a velocity instruction signal from data for determining a position stored in the memory device 32 and supplies the velocity instruction signal to the driving circuit 2 via the velocity instruction apparatus 33.

Next, a control method in the first embodiment of the present invention is described.

In the articulated robot, the torque impressed on the motor and the speed reducer differs largely responding to a state ($\theta_2$) against the first arm 11 of the second arm 12, a transfer velocities ($\dot{\theta}_1$ , $\dot{\theta}_2$) of the first arm 11 and the second arm 12, a rotation directions (positive and negative of $\Delta\theta_1$ , $\Delta\theta_2$) of the first arm 11 and the second arm 12.

According to a dynamics principle, in the composition of the present embodiment, a torque $T_1(t)$ impressed on the motor 13, a torque $T_2(t)$ impressed on the motor 14, a torque $H_1(t)$ impressed on the speed reducer 15 and a torque $H_2(t)$ impressed on the speed reducer 16 are, for example, expressed as

$$T_1(t) = a_1\dot{\omega}_1 + a_2 H_1(t) + a_3\omega_1 + a_4 \frac{\omega_1}{|\omega_1|} \quad \cdots\cdots \quad (1)$$

$$T_2(t) = b_1\dot{\omega}_2 + b_2 H_2(t) + b_3\omega_2 + b_4 \frac{\omega_2}{|\omega_2|} \quad \cdots\cdots \quad (2)$$

$$H_1(t) = (a_5+a_6\cos\theta_2)\dot{\omega}_1 + (a_7+a_8\cos\theta_2)\dot{\omega}_2$$
$$- (a_9\omega_1\omega_2+a_{10}\omega_2)^2\sin\theta_2 \quad \cdots\cdots \quad (3)$$

$$H_2(t) = b_5\dot{\omega}_2 + (b_6+b_7\cos\theta_2)\dot{\omega}_1$$
$$+ b_8\omega_1^2\sin\theta_2 \quad \cdots\cdots \quad (4),$$

wherein: $\omega_1$ , $\omega_2$ are angular velocities of the motors 13, 14, respectively; $\dot{\omega}_1$ , $\dot{\omega}_2$ are time differentiations of them; $\theta_2$ is an angle made by the second arm 12 against the first arm 11; $a_1$ , $a_2$ , $\ldots$ . $a_{10}$ and $b_1$ , $b_2$ , ..., $b_8$ are respectively peculiar constants of each robot, and are determined by an arm length, weight, speed reduction ratio, friction resistance and so on.

The object of the present invention is to control the largest torque impressed on the motor and the speed reducer. Generally, in the articulated robot, the acceleration time, the deceleration time is about 0.2--0.5 second and therefore in the equations (1)--(4), the values of $\dot{\omega}_1$ , $\dot{\omega}_2$ are larger than that of $\omega_1$ , $\omega_2$ and therefore generally the torque impressed on the motor and the speed reducer in the acceleration and deceleration is larger than that at $\dot{\omega}_1 = 0$, $\dot{\omega}_2 = 0$, that is, the transfer velocity becomes constant. Accordingly, hereinafter the description is made limitedly to the torque control in the acceleration and the deceleration.

Firstly, described is the torque control in the acceleration when at least one of the first arm 11 and the second arm 12 reaches the largest rotation number.

When, as an example of the reference acceleration curve, as shown in FIG.7 such control is executed that the following relation holds:

$$\omega = f_u \left(\frac{t}{t_u}\right) \qquad \cdots\cdots\cdots (5)$$

$$0 \leq \frac{t}{t_u} \leq 1$$

$$f_u(0) = 0, \qquad f_u(1) = 1$$

wherein $t_u$ is a time for the acceleration, and $\omega_1$ and $\omega_2$ are given as

$$\omega_1 = C_1 f_u \left(-\frac{t}{t_u}\right) \qquad \cdots\cdots\cdots (6)$$

$$\omega_2 = C_2 f_u \left(\frac{t}{t_u}\right) \qquad \cdots\cdots\cdots (7)$$

wherein $C_1$ and $C_2$ are given constants for respective steps;

then, by providing that angle of the second arm 12 against the first arm 11 at the beginning of the acceleration is $\theta_{2s}$ and values when the $\omega_1$, $\omega_2$ become constant are $\overline{\omega}_1$, $\overline{\omega}_2$ respectively, the acceleration state of the first arm 11 and the second arm 12 is determined definitely by $\theta_{2s}, \overline{\omega}_1, \overline{\omega}_2, t_u$ since the $\omega_1$, $\omega_2$ are always in linear relation from the equations (6), (7);

and hence, by providing that peak values of $T_1(t)$, $T_2(t)$, $H_1(t)$, $H_2(t)$ are $T_{1p}$, $T_{2p}$, $H_{1p}$, $H_{2p}$ respectively, they are expressed by the following functions that:

$$T_{1p} = g_1(\theta_{2s}, \overline{\omega}_1, \overline{\omega}_2, t_u) \qquad (8)$$

$$T_{2p} = g_2(\theta_{2s}, \overline{\omega}_1, \overline{\omega}_2, t_u) \qquad (9)$$

$$H_{1p} = g_3(\theta_{2s}, \overline{\omega}_1, \overline{\omega}_2, t_u) \qquad (10)$$

$$H_{2p} = g_4(\theta_{2s}, \overline{\omega}_1, \overline{\omega}_2, t_u) \qquad (11).$$

Here, by providing that
$\Delta\theta_1$ is a transfer angle of the first arm 11,
$\Delta\theta_2$ is a transfer angle of the second arm 12,
$m_1$ is a reducing ratio of the speed reducer 15

$(m_1 > 0)$,

$m_2$ is a reducing ratio of the speed reducer 16

$(m_2 > 0)$,

since the $\omega_1$ and $\omega_2$ is always in a linear relation and the first arm 11 and the second arm 12 start simultaneously and stop simultaneously,

$$\frac{\Delta\theta_2 m_2}{\Delta\theta_1 m_1} = \frac{\omega_2}{\omega_1} = \frac{\overline{\omega}_2}{\overline{\omega}_1} \qquad \cdots\cdots\cdots (12)$$

holds. By providing that $\omega_{1M}$, $\omega_{2M}$ are the largest rotation velocity of the motor ($\omega_{1M} > 0$, $\omega_{2M} > 0$) and considering the rotation direction,

i) when $\Delta\theta_1 > 0$ ,

$$\left|\frac{\Delta\theta_2 m_2}{\Delta\theta_1 m_1}\right| \leq \frac{\omega_{2M}}{\omega_{1M}} \quad :$$

$$\bar{\omega}_1 = \omega_{1M} \qquad (13),$$

$$\bar{\omega}_2 = \frac{\Delta\theta_2 m_2}{\Delta\theta_1 m_1} \omega_{1M} \qquad \ldots\ldots\ldots (14),$$

ii) when $\Delta\theta_1 < 0$ ,

$$\left|\frac{\Delta\theta_2 m_2}{\Delta\theta_1 m_1}\right| \leq \frac{\omega_{2M}}{\omega_{1M}} \quad :$$

$$\bar{\omega}_1 = -\omega_{1M} \qquad (15),$$

$$\bar{\omega}_2 = -\frac{\Delta\theta_2 m_2}{\Delta\theta_1 m_1} \omega_{1M} \qquad \ldots\ldots\ldots (16),$$

iii) when $\Delta\theta_2 > 0$,

$$\left|\frac{\Delta\theta_2 m_2}{\Delta\theta_1 m_1}\right| > \frac{\omega_{2M}}{\omega_{1M}} \quad :$$

$$\bar{\omega}_1 = \frac{\Delta\theta_1 m_1}{\Delta\theta_2 m_2} \omega_{2M} \qquad \ldots\ldots (17),$$

$$\bar{\omega}_2 = \omega_{2M} \qquad (18),$$

iv) when $\Delta\theta_2 < 0$,

$$\left|\frac{\Delta\theta_2 m_2}{\Delta\theta_1 m_1}\right| > \frac{\omega_{2M}}{\omega_{1M}} \quad :$$

$$\bar{\omega}_1 = -\frac{\Delta\theta_1 m_1}{\Delta\theta_2 m_2} \omega_{2M} \qquad \ldots\ldots (19),$$

$$\bar{\omega}_2 = -\omega_{2M} \qquad (20),$$

v) when $\Delta\theta_1 = 0, \Delta\theta_2 > 0$ :

$\overline{\omega}_1 = 0$    (21),

$\overline{\omega}_2 = \omega_{2M}$    (18),

vi) when $\Delta\theta_1 = 0$, $\Delta\theta_2 < 0$ :

$\overline{\omega}_1 = 0$    (21),

$\overline{\omega}_2 = -\omega_{2M}$    (20),

vii) when $\Delta\theta_1 > 0$, $\Delta\theta_2 = 0$ :

$\overline{\omega}_1 = \omega_{1M}$    (13),

$\overline{\omega}_2 = 0$    (22),

viii) when $\Delta\theta_1 < 0$, $\Delta\theta_2 = 0$ :

$\overline{\omega}_1 = -\omega_{1M}$    (15),

$\overline{\omega}_2 = 0$    (22),

hold.
  Here, by providing that

$$\alpha = \frac{\Delta\theta_2 m_2 \omega_{1M}}{\Delta\theta_1 m_1 \omega_{2M}} \qquad \cdots\cdots\cdots (23),$$

$$\beta = \frac{\Delta\theta_1 m_1 \omega_{2M}}{\Delta\theta_2 m_2 \omega_{1M}} \qquad \cdots\cdots\cdots (24),$$

when $\Delta\theta_1 = 0$    $\beta = 0$ and
when $\Delta\theta_2 = 0$    $\alpha = 0$

hold and therefore the above equations (13)--(22) are arranged as
  i) when $\Delta\theta_1 > 0$, $|\alpha| \leqq 1$ :

$\overline{\omega}_1 = \omega_{1M}$    (25),

$\overline{\omega}_2 = \alpha\omega_{2M}$    (26),

ii) when $\Delta\theta_1 < 0$, $|\alpha| \leqq 1$ :

$\overline{\omega}_1 = -\omega_{1M}$    (27),

$\overline{\omega}_2 = -\alpha\omega_{2M}$    (28),

iii) when $\Delta\theta_2 => 0$, $|\beta| < 1$ :

$\overline{\omega}_1 = \beta\omega_{1M}$    (29),

$$\bar{\omega}_2 = \omega_{2M} \quad (30),$$

iv) when $\Delta\theta_2 < 0$, $|\beta| < 1$ :

$$\bar{\omega}_1 = -\beta\omega_{1M} \quad (31),$$

$$\bar{\omega}_2 = -\omega_{2M} \quad (32).$$

Therefore, the equations (8)--(11) become as
i) when $|\alpha| \leqq 1$ :

$$T_{1p} = g_1\left(\theta_{2s} \ , \ \frac{\Delta\theta_1 \omega_{1M}}{|\Delta\theta_1|} \ , \ \frac{\Delta\theta_1 \alpha\omega_{2M}}{|\Delta\theta_1|} \ , \ t_u\right) \ \ldots \ (33),$$

$$T_{2p} = g_2\left(\theta_{2s} \ , \ \frac{\Delta\theta_1 \omega_{1M}}{|\Delta\theta_1|} \ , \ \frac{\Delta\theta_1 \alpha\omega_{2M}}{|\Delta\theta_1|} \ , \ t_u\right) \ \ldots \ (34),$$

$$H_{1p} = g_3\left(\theta_{2s} \ , \ \frac{\Delta\theta_1 \omega_{1M}}{|\Delta\theta_1|} \ , \ \frac{\Delta\theta_1 \alpha\omega_{2M}}{|\Delta\theta_1|} \ , \ t_u\right) \ \ldots \ (35),$$

$$H_{2p} = g_4\left(\theta_{2s} \ , \ \frac{\Delta\theta_1 \omega_{1M}}{|\Delta\theta_1|} \ , \ \frac{\Delta\theta_1 \alpha\omega_{2M}}{|\Delta\theta_1|} \ , \ t_u\right) \ \ldots \ (36),$$

ii) when $|\beta| < 1$ :

$$T_{1p} = g_1\left(\theta_{2s} \ , \ \frac{\Delta\theta_2 \beta\omega_{1M}}{|\Delta\theta_2|} \ , \ \frac{\Delta\theta_2 \omega_{2M}}{|\Delta\theta_2|} \ , \ t_u\right) \ \ldots \ (37),$$

$$T_{2p} = g_2\left(\theta_{2s} \ , \ \frac{\Delta\theta_2 \beta\omega_{1M}}{|\Delta\theta_2|} \ , \ \frac{\Delta\theta_2 \omega_{2M}}{|\Delta\theta_2|} \ , \ t_u\right) \ \ldots \ (38),$$

$$H_{1p} = g_3\left(\theta_{2s} \ , \ \frac{\Delta\theta_2 \beta\omega_{1M}}{|\Delta\theta_2|} \ , \ \frac{\Delta\theta_2 \omega_{2M}}{|\Delta\theta_2|} \ , \ t_u\right) \ \ldots \ (39),$$

$$H_{2p} = g_4\left(\theta_{2s} \ , \ \frac{\Delta\theta_2 \beta\omega_{1M}}{|\Delta\theta_2|} \ , \ \frac{\Delta\theta_2 \omega_{2M}}{|\Delta\theta_2|} \ , \ t_u\right) \ \ldots \ (40).$$

Therefore, any $T_{1p}$ , $T_{2p}$ , $H_{1p}$ , $H_{2p}$ are expressed by $\theta_{2s}$ , $\alpha$, $\beta$, $\omega_{1M}$ , $\omega_{2M}$ , positive and negative of $\Delta\theta_1$ , positive and negative of $\Delta\theta_2$ and $t_u$. Because $\omega_{1M}$ and $\omega_{2M}$ are constants and $\theta_{2s}$ , $\alpha$, $\beta$, positive and negative of $\Delta\theta_1$ and positive and negative of $\Delta\theta_2$ are determined definitely by positional data of point $P_i$ and point $P_{i+1}$ at a transfer step from point $P_i$ to next point $P_{i+1}$ , $t_u$ need be varied in order to vary the valaues of $T_{1p}$ , $T_{2p}$ , $H_{1p}$ and $H_{2p}$.

The object of the present invention is that any $T_{1p}$ , $T_{2p}$ , $H_{1p}$ , $H_{2p}$ are not exceeding the tolerance limits determined respectively and further under such condition $t_u$ is made smallest. Therefore, the optimum acceleration time $t_u$ can be obtained by using such method that the maximum values of the absolute values of $T_{1p}$ , $T_{2p}$ , $H_{1p}$ and $H_{2p}$ are obtained by varying the value of $t_u$ and those values are not exceeding the tolerance limits determined respectively and further under such condition $t_u$ is converged to the smallest $t_u$.

Responding to the optimum acceleration time $\hat{t}_{ui}$ obtained so of the step from point $P_i$ to point $P_{i+1}$ , the optimum acceleration curve is obtained as $|\alpha| \leq 1$ (sic):

i) when $|\alpha| \leq 1$ :

$$\omega_{1i}(t) = \frac{\Delta\theta_1}{|\Delta\theta_1|} \omega_{1M} f_u \left(\frac{t}{\hat{t}_{ui}}\right) ,$$

$$\omega_{2i}(t) = \frac{\Delta\theta_1}{|\Delta\theta_1|} \alpha\omega_{2M} f_u \left(\frac{t}{\hat{t}_{ui}}\right) ,$$

ii) when $|\beta| < 1$ :

$$\omega_{1i}(t) = \frac{\Delta\theta_2}{|\Delta\theta_2|} \beta\omega_{1M} f_u \left(\frac{t}{\hat{t}_{ui}}\right) ,$$

$$\omega_{2i}(t) = \frac{\Delta\theta_2}{|\Delta\theta_2|} \omega_{2M} f_u \left(\frac{t}{\hat{t}_{ui}}\right) .$$

Also, in the deceleration case, as similar to the acceleration case, by using $\theta_{2E}$ of the second arm 12 against the first arm 11 at the point $P_{i+1}$ instead of $\theta_{2s}$ , using the reference deceleration curve

$$f d\left(\frac{t}{t_d}\right)$$

as shown in FIG.8, wherein

fd(0) = 1 and
fd(1) = 0,

instead of the reference acceleration curve

$$f u\left(\frac{t}{t_u}\right) ,$$

and using t-t_s (t_s: deceleration starting time) instead of t, the optimum deceleration time $\hat{t}_{di}$ can be obtained.

Further, the optimum deceleration curve can be obtained likewise as
i) when $|\alpha| \leq 1$ :

$$\omega_{it}(t) = \frac{\Delta\theta_1}{|\Delta\theta_1|} \omega_{1M} f_d \left(\frac{t-t_s}{\hat{t}_{di}}\right) ,$$

$$\omega_{2i}(t) = \frac{\Delta\theta_1}{|\Delta\theta_1|} \alpha\omega_{2M} f_d \left(\frac{t-t_s}{\hat{t}_{di}}\right) ,$$

ii) when $|\beta| < 1$ :

$$\omega_{1i}(t) = \frac{\Delta\theta_2}{|\Delta\theta_2|} \beta\omega_{1M}f_d \left(\frac{t-t_s}{\hat{t}_{di}}\right) ,$$

$$\omega_{2i}(t) = \frac{\Delta\theta_2}{|\Delta\theta_2|} \omega_{2M}f_d \left(\frac{t-t_s}{\hat{t}_{di}}\right) .$$

The angular velocity data obtained so are supplied to the velocity instruction circuit 33 and are issued as a velocity signal to the driving circuit 2. Further, the driving circuit 2 amplifies and the motor 13 and the motor 14 are driven.

Next, a case, wherein $\Delta\theta_1$ and $\Delta\theta_2$ are small and the $\omega_1$ and the $\omega_2$ do not mount up to the $\overline{\omega}_1$ and $\overline{\omega}_2$ , is elucidated.

At the time, the arm is acceleratged from A along the acceleration curve:

$$\omega_1 = C_1 f_u \left(\frac{t}{t_u}\right) , \quad \omega_2 = C_2 f_u \left(\frac{t}{t_u}\right),$$

and is made to a constant velocity from B and B', and now is decelerated from C and C' along the deceleration curve:

$$\omega_1 = D_1 f_d \left(\frac{t}{t_d}\right) , \quad \omega_2 = D_2 f_d \left(\frac{t}{t_d}\right)$$

and stops at D.

The problem is that intervals of B--E, B'--E' of the acceleration curve and intervals of F--C, F'--C' of the deceleration curve are not used in the actual operation and the parameters $t_u$ , $t_d$ are not used in the determining of the acceleration and the deceleration.

However, in the embodiment, the processing can be made by quite the same algorithm as that described previously by the below-mentioned concept.

As shown in FIG.9, such an operation is supposed that a part which reaches $\overline{\omega}_1$ and $\overline{\omega}_2$ appears by multiplying $\Delta\theta_1$ , $\Delta\theta_2$ of FIG. 10 by certain constants. Then,

$$T_1 (A\text{--}B) \subset T_1 (A\text{--}E)$$

$$T_2 (A\text{--}B') \subset T_2 (A\text{--}E')$$

$$H_1 (A\text{--}B) \subset H_1 (A\text{--}E)$$

$$H_2 (A\text{--}B') \subset H_2 (A\text{--}E')$$

$$T_1 (C\text{--}D) \subset T_1 (F\text{--}D)$$

$$T_2 (C'\text{--}D) \subset T_2 (F'\text{--}D)$$

$$H_1 (C\text{--}D) \subset H_1 (F\text{--}D)$$

$$H_2 (C'\text{--}D) \subset H_2 (F'\text{--}D)$$

hold, and therefore always the following hold:

$$| \ T_{1P}(A - B) \ | \leq | \ T_{1p}(A - E) \ |$$
$$| \ T_{2p}(A - B')| \leq | \ T_{2p}(A - E')|$$
$$| \ H_{1p}(A - B) \ | \leq | \ H_{1p}(A - E) \ |$$
$$| \ H_{2p}(A - B')| \leq | \ H_{2p}(A - E')|$$
$$| \ T_{1p}(C - D) \ | \leq | \ T_{1p}(F - D) \ |$$
$$| \ T_{2p}(C'- D) \ | \leq | \ T_{2p}(F'- D) \ |$$
$$| \ H_{1p}(C - D) \ | \leq | \ H_{1p}(F - D) \ |$$
$$| \ H_{2p}(C'- D) \ | \leq | \ H_{2p}(F' - D) \ |.$$

Accordingly, even though $t_u$ and $t_d$ are obtained by replacing the operation of FIG.10 with the operation of FIG.9, overload is not produced on the motor and the speed reducer.

Further, in the embodiment, the $\overline{\omega}_1$ and $\overline{\omega}_2$ are not used to calculate the peak torque and $\alpha$, $\beta$, $\omega_{1M}$ , $\omega_{2M}$ , positive and negative of $\Delta\theta_1$ and positive and negative of $\Delta\theta_2$ are used, and $\alpha$ and $\beta$ are determined by the ratio of $\Delta\theta_1$ and $\Delta\theta_2$ as shown by the equations (23)--(24) and are not affected by the magnitudes of the $\Delta\theta_1$ and $\Delta\theta_2$. Accordingly, to process the operation shown in FIG.9 with the previously mentioned algorithm executes automatically the replacement of the processing of the operation shown in FIG.10, and therefore a particular dealing is not necessary against the operation shown in FIG.9 and the wholly same algorithm can be used to process.

The above-mentioned algorithm is described by using the flow chart shown in FIG.11.

① The data about the two points $P_i$ and $P_{i+1}$ are read in.

② Such $t_u$ is obtained which makes $T_{1p}$ , $T_{2p}$ , $H_{1p}$ and $H_{2p}$ in the acceleration from point $P_i$ to point $P_{i+1}$ to be:

$$| \ T_{1p} \ | \leq T_{1max} \text{ and}$$
$$| \ T_{2p} \ | \leq T_{2max} \text{ and}$$
$$| \ H_{1p} \ | \leq H_{1max} \text{ and}$$
$$| \ H_{2p} \ | \leq H_{2max}$$

and further

$$| \ T_{1max}- | \ T_{1P} \ | \ | <_{\epsilon_1} \text{ or}$$
$$| \ T_{2max}- | \ T_{2p} \ | \ | <_{\epsilon_2} \text{ or}$$
$$| \ H_{1max}- | \ H_{1p} \ | \ | <_{\epsilon_3} \text{ or}$$
$$| \ H_{2max}- | \ H_{2p} \ | \ | <_{\epsilon_4}$$

by using an optimizing method. Here, $T_{1max}$ , $T_{2max}$ , $H_{1max}$ , $H_{2max}$ are tolerance load torque of the motor and the speed reducer and $\epsilon_1$ , $\epsilon_2$ , $\epsilon_3$ , $\epsilon_4$ are substantiallly small number.

Further, in the deceleration, the optimum deceleration time $t_d$ is obtained likewise.

③ The $t_u$ and $t_d$ obtained in the step ② are considered as $\hat{t}_{ui}$ and $\hat{t}_{di}$.

④ The acceleration curve is set as:

i) when $| \ \alpha \ | \leq 1$ :

$$\omega_{1i}(t) = \frac{\Delta\theta_1}{|\Delta\theta_1|} \ \omega_{1M}{}^f{}_u \ \left(\frac{t}{\hat{t}_{ui}}\right),$$

$$\omega_{2i}(t) = \frac{\Delta\theta_1}{|\Delta\theta_1|} \ \alpha\omega_{2M}{}^f{}_u \ \left(\frac{t}{\hat{t}_{ui}}\right),$$

10

ii) when $|\beta| < 1$ :

$$\omega_{1i}(t) = \frac{\Delta\theta_2}{|\Delta\theta_2|} \beta\omega_{1M} f_u \left(\frac{t}{\hat{t}_{ui}}\right) ,$$

$$\omega_{2i}(t) = \frac{\Delta\theta_2}{|\Delta\theta_2|} \omega_{2M} f_u \left(\frac{t}{\hat{t}_{ui}}\right) ,$$

and the deceleration curve is set as:
i) when $|\alpha| \leqq 1$ :

$$\omega_{1i}(t) = \frac{\Delta\theta_1}{|\Delta\theta_1|} \omega_{1M} f_d \left(\frac{t-t_s}{\hat{t}_{di}}\right) ,$$

$$\omega_{2i}(t) = \frac{\Delta\theta_1}{|\Delta\theta_1|} \alpha\omega_{2M} f_d \left(\frac{t-t_s}{\hat{t}_{di}}\right) ,$$

ii) when $|\beta| < 1$ :

$$\omega_{1i}(t) = \frac{\Delta\theta_2}{|\Delta\theta_2|} \beta\omega_{1M} f_d \left(\frac{t-t_s}{\hat{t}_{di}}\right) ,$$

$$\omega_{2i}(t) = \frac{\Delta\theta_2}{|\Delta\theta_2|} \omega_{2M} f_d \left(\frac{t-t_s}{\hat{t}_{di}}\right) .$$

Hereinafter, the steps from the step ① to the step ④ are repeated until the point $P_{i+1}$ reaches a final point.

Next, a second embodiment of the present invention is described basing on FIG.12. The embodiment has such feature that in the step ② of the flow chart shown in FIG.11, each parameter is made discrete value parameter and the optimum acceleration time and the optimum deceleration every each parameter is calculated and memorized beforehand and the optimum acceleration time and the optimum deceleration time are obtained approximately by comparing the parameter obtained from the positioned data of point $P_i$ and point $P_{i+1}$ with the discrete value parameter, thereby simplifying the process largely.

As described in the first embodiment, there are the following ones as the parameter for the optimum acceleration time and the optimum deceleration time:

$\theta_{2s}$:     angle of the second arm 12 against the first arm 11 at the acceleration start

$\theta_{2E}$:     angle of the second arm 12 against the first arm 11 at the stop

$$\alpha \quad : \quad \alpha = \frac{\Delta\theta_2 m_2 \omega_{1M}}{\Delta\theta_1 m_1 \omega_{2M}} ,$$

$$\beta \quad : \quad \beta = \frac{\Delta\theta_1 m_1 \omega_{2M}}{\Delta\theta_2 m_2 \omega_{1M}} ,$$

EP 0 191 103 B1

positive and negative of $\Delta\theta_1$ and

positive and negative of $\Delta\theta_2$,

but the positive and negative of $\Delta\theta_1$ and the positive and the negative of $\Delta\theta_2$ have only two values respectively, and therefore it is obvious that to make the $\theta_{2s}$, $\theta_{2E}$, $\alpha$ and $\beta$ discrete value parameter is enough.

Hereinafter, the algorithm in the acceleration is described basing on the flow chart in FIG.12.

① The positional data of the two points $P_i$ and $P_{i+1}$ are read in.

② The parameters $\theta_{2s}$, $\theta_{2E}$, $\alpha$, $\beta$, $\Delta\theta_1$ and $\Delta\theta_2$ are obtained.

③ The acceleration time $t_u$ is searched on a table memorized beforehand by judging to which of the pattern grouped into four kinds, the operation pattern of the robot belongs.

Here, the table is as

i) when $|\alpha| \leqq 1$, $\Delta\theta_1 > 0$ :

$$\hat{t}_{ui} (\theta_{2sj}, \alpha_k),$$

ii) when $|\alpha| \leqq 1$, $\Delta\theta_1 < 0$ :

$$\hat{t}_{ui} (\theta_{2sj}, \alpha k),$$

iii) when $|\beta| \leqq 1$, $\Delta\theta_2 > 0$ :

$$\hat{t}_{ui} (\theta_{2sj}, \beta_k),$$

iv) when $|\beta| < 1$, $\Delta\theta_2 < 0$ :

$$\hat{t}_{ui} (\theta_{2sj}, \beta_k),$$

wherein

$j = 1, 2, 3, \ldots\ldots, \ell$,
$k = 1, 2, 3, \ldots\ldots, \ell'$,
$-\theta_{2max} \leqq \theta_{2sj-1} \leqq \theta_{2sj} \leqq \theta_{2max}$,
$-1 \leqq \alpha_{k-1} < \alpha_k \leqq 1$,
$-1 \leqq \beta_{k-1} < \beta_k \leqq 1$,

and $\theta_{2max}$ is a maximum angle of the second arm against the first arm, and $\ell$ and $\ell'$ are natural number.

④ The acceleration curve is determined against the obtained $\hat{t}_{ui}$ as:

i) when $|\alpha| \leqq 1$ :

$$\omega_{1i}(t) = \frac{\Delta\theta_1}{|\Delta\theta_1|} \omega_{1M} f_u \left(\frac{t}{\hat{t}_{ui}}\right),$$

$$\omega_{2i}(t) = \frac{\Delta\theta_1}{|\Delta\theta_1|} \alpha\omega_{2M} f_u \left(\frac{t}{\hat{t}_{ui}}\right),$$

12

ii) when $|\beta| < 1$ :

$$\omega_{1i}(t) = \frac{\Delta\theta_2}{|\Delta\theta_2|} \beta\omega_{1M} f_u \left(\frac{t}{\hat{t}_{ui}}\right) ,$$

$$\omega_{2i}(t) = \frac{\Delta\theta_2}{|\Delta\theta_2|} \omega_{2M} f_u \left(\frac{t}{\hat{t}_{ui}}\right) .$$

At the deceleration, the process is similar as the above-mentioned ③ and ④.

Hereinafter, the steps of ① to ④ are repeated until the point $P_{i+1}$ reaches the final point.

As mentioned above, in the embodiment, since the process for obtaining the acceleration and deceleration time, $\hat{t}_{ui}$ and $\hat{t}_{di}$ is simplified largely, there are such feature that even a small operation processing apparatus can respond sufficiently.

Next, a third embodiment of the present invention is described basing on FIGs.13--15.

In the above second embodiment, the symmetrical operations as shown in FIG.13 and FIG.14 are considered as different operations, and memory tabales are prepared respectively. In the operations of FIG.13 and FIG.14, as apparent from the figure,

$\Delta\theta_1 (9) = - \Delta\theta_1 (8)$
$\Delta\theta_2 (9) = - \Delta\theta_2 (8)$
$\Delta_{2s} (9) = - \Delta_{2s} (8)$

hold. Therefore, in the operation of FIG.13 and FIG.14, the load torques of the motor and the speed reducer are contrary at their positive and negative, but the absolute valaues are equal. Since the object of the present invention is to obtain the acceleration and deceleration time under the case that the absolute value of the load torque is within the tolerance limit and further is optimum, by controlling of the peak torque, the above two operations may be considered to be the same operation and one memory table may be prepared against it; and by executing so the amount of the memory table can be compressed to half of that in the second embodiment.

Hereinafter, the part corresponding to the step ③ of FIG.12 is shown in FIG.15.

In the above-mentioned second embodiment, the positive and negative of $\Delta\theta_1$ and $\Delta\theta_2$ are judged after the judgment of $|\alpha|$ , but in the third embodiment, the positives and negatives of $\theta_1 \cdot \theta_{2s}$ and $\Delta\theta_2 \cdot \theta_{2s}$ are judged. The reason is that, by taking the case of FIG.13 and FIG.14, the following holds:

$$\Delta\theta_1(9) \cdot \theta_{2s}(9) = (-\Delta\theta_1(8)) \cdot (-\theta_{2s}(8))$$

$$= \Delta\theta_1(8) \cdot \theta_{2s}(8) .$$

That is, by judging the positive and negative of $\Delta\theta_1 \cdot \Delta_{2s}$ , these two operations can be treated as the same operation. Also, similar is as to $\Delta\theta_2 \cdot \theta_{2s}$.

It is necessary to use $|\theta_{2s}|_j$ instead of $\theta_{2sj}$ as the discrete value parameter of the memory table.

Thus, after arrangement, the following holds:

i) when $|\alpha| \leqq 1$ , $\Delta\theta_1 \cdot \theta_{2s} \geqq 0$ :

$\hat{t}_{ui} (|\theta_{2s}|_j , \alpha_k) ,$

ii) when $|\alpha| \leqq 1$ , $\Delta\theta_1 \cdot \theta_{2s} < 0$ :

$\hat{t}_{ui} (|\theta_{2s}|_j , \alpha_k) ,$

iii) when $| \beta | < 1$ , $\Delta\theta_2 \cdot \theta_{2s} \geqq 0$ :

$\hat{t}_{ui} (|\theta_{2s}|_j , \alpha_k)$ ,

iv) when $| \beta | < 1$ , $\Delta\theta_2 \cdot \theta_{2s} < 0$ :

$\hat{t}_{ui} (|\theta_{2s}|_j , \alpha_k)$ ,
$j = 1 , 2 , 3 , ..... , \ell ,$
$k = 1 , 2 , 3 , ..... , \ell' ,$
$0 \leq |\theta_{2s}|_{j-1} < |\theta_{2s}|_j \leq \theta_{2smax} ,$
$-1 \leq \alpha_{k-1} < \alpha_k \leq 1 ,$
$-1 \leq \beta_{k-1} < \beta_k \leq 1 ,$

and that $\theta_{2smax}$ is a maximum angle of the second arm against the first arm, and $\ell$ and $\ell'$ are natural number.

Other process except for the above can be processed in the same way as in the second embodiment.

As mentioned above, in the embodiment, the memory table can be made half of that of the second embodiment.

Incidentally, in the each above-mentioned embodiment, the reference acceleration curve and the reference decelelation curve are for producing the velocity instruction basing on the time but this way is one example and other may be used.

Further, in the above-mentioned each embodiment, the load torque of the motor and the speed reducer is used as an optimizing condition; but this is one example and, for example, the optimizing can be executed not considering the load torque of the speed reducer by using such speed reducer having large tolerance limit. In contrary, the load torque of other element may be taken into consideration. Further, in order to suppress the vibration, the factor made by differentiating the load torque in a time can be considered. In sum, it will do to intend to optimize, by contracting and/or extending the acceleration and deceleration time, the peak rotation number basing on the reference acceleration and deceleration curve, as a result.

Further, in the second and third embodiment, $\theta_{2s}$ , $\alpha$, $\beta$ and $\theta_{2E}$ are used as the discrete value parameter; but this is one example; and since the following hold:

$$\alpha = \frac{\Delta\theta_2 \cdot m_2 \cdot \omega_{1M}}{\Delta\theta_1 \cdot m_1 \cdot \omega_{2M}} \quad .......... \quad (23),$$

$$\beta = \frac{\Delta\theta_1 \cdot m_1 \cdot \omega_{2M}}{\Delta\theta_2 \cdot m_2 \cdot \omega_{1M}} \quad .......... \quad (24),$$

$\theta_{2E} = \theta_{2s} + \Delta\theta_2 ,$

using of $\theta_{2s}$ , $\alpha$, $\beta$ and $\theta_{2E}$ as the discrete value parameter and using $\theta_{2s}$ , $\Delta\theta_1$ and $\Delta\theta_2$ as the discrete value parameter mean wholly the same matter and the present invention is not different even though such parameters are used as the discrete parameter.

## INDUSTRIAL UTILITY

As mentioned abaove, the present invention is that every each operation, basing on the supplied positional data, the angular acceleration velocity is controlled in a manner that the torque impressed on the motor or on the motor and speed reducer at the acceleration and the deceleration becomes maximum under tolerance limit, and therefore the transfer time can be shortened largely and reasonably, in comparison with the conventional case in which the acceleration and the deceleration time is fixed.

EP 0 191 103 B1

A list of reference numerals of figures

| | |
|---|---|
| 1 | Supporter of a robot main body |
| 2 | Motor driving circuit |
| 3 | Numerical control apparatus |
| 11 | First arm |
| 12 | Second arm |
| 13 | First motor |
| 14 | Second motor |
| 15 | First speed reducer |
| 16 | Second speed reducer |
| 31 | Operation apparatus |
| 32 | Memory device |
| 33 | Velocity instruction apparatus |

**Claims**

1. A method for controlling an articulated robot which comprises a first arm (11) rotatably supported at one of its ends by a main body via a first articulation, a second arm (12) rotatably supported at one of its ends by the other end of the first arm (11) via a second articulation, first and second motors (13, 14) provided at respective ones of said articulations to rotate said first and second arms (11, 12) respectively, and a memory device (32) for memorizing a reference acceleration curve and reference deceleration curve in advance, each curve being either a curve of velocity versus time or a curve of velocity versus distance, whereby velocity commands for a motor (13; 14) may be read from said curves on the basis of elapsed time or on the basis of distance travelled by the respective arm (11; 12), the movement of said first and second arms (11, 12) being controlled by giving angular velocity commands to the respective motors (13, 14),

   characterized in that said method comprises the steps of:

   a) reading in data indicative of a starting position $P_i$ and a target position $P_{i+1}$ of the other end of said second arm (12);

   b) calculating, on the basis of the stored reference acceleration curve, on the maximum permissible velocity of the respective motors (13, 14) and on the starting position $P_i$, the load torques which would be imposed on said first and second motors (13, 14) during acceleration of the other end of said second arm (12) when it moves from position $P_i$ towards position $P_{i+1}$;

   c) issuing velocity commands to the motors (13, 14) corresponding to the values read from the stored reference acceleration curve if it is found in step (b) that both motors (13, 14) would operate within their respective maximum permissible load torques but one of them would operate very near to its maximum permissible load torque;

   d) repeating step (b), if it is found in that step that neither motor (13; 14) would be operating near to its maximum permissible load torque, using not the stored reference acceleration curve but a modified acceleration curve obtained by compressing or expanding the time or distance axis of the stored reference acceleration curve;

   e) issuing velocity commands to the motors (13, 14) on the basis of the modified acceleration curve when it is found in Step (d) that both of the motors (13, 14) would be operating within their maximum permissible load torques but that one of the motors (13; 14) would be operating very near to its maximum permissible load torque;

   f) calculating, on the basis of the stored deceleration curve, on the maximum permissible velocity of the respective motors (13, 14) and on the target position $P_{i+1}$, the load torques which would be imposed on said first and second motors (13, 14) during deceleration of the other end of said second arm (12) as it moves towards position $P_{i+1}$;

   g) issuing velocity commands to the motors (13, 14) corresponding to the values read from the stored reference deceleration curve if it is found in step (f) that both motors (13, 14) would operate within their respective maximum permissible load torques but one of them would operate very near to its maximum permissible load torque;

   h) repeating step (f), if it is found in that step that either motor (13; 14) would be operating in excess of its maximum permissible load torque, using not the stored reference deceleration curve but a modified deceleration curve obtained by compressing or expanding the time or distance axis of the stored reference deceleration curve;

15

i) issuing velocity commands to the motors (13, 14) on the basis of the modified deceleration curve when it is found in step (h) that both of the motors (13, 14) would be operating within their maximum permissible load torques and that at least one of the motors (13; 14) would be operating very near to its maximum permissible load torque.

2. Method for controlling an articulated robot in accordance with claim 1, wherein
said first motor (13) comprises a first speed reducer (15) and said second motor (14) comprises a second speed reducer (16), and said acceleration curve and deceleration curve are modified so that the torques of said first motor (13), second motor (14), first reducer (15) and second reducer (16) do not exceed respective maximum permissive torques.

**Patentansprüche**

1. Verfahren zur Steuerung eines Gelenkrobotors, der einen ersten Arm (11), der an einem seiner Enden über ein erstes Gelenk von einem Hauptkörper drehbar abgestützt ist, einen zweiten Arm (12), der an einem seiner Enden durch das andere Ende des ersten Armes (11) über ein zweites Gelenk drehbar abgestützt ist, einen ersten Motor (13) und einen zweiten Motor (14), die an dem betreffenden Gelenk vorgesehen sind, um den ersten Arm (11) bzw. den zweiten Arm (12) zu drehen, und eine Speichereinrichtung (32) aufweist, um eine Bezugsbeschleunigungskurve und eine Bezugsverzögerungskurve zuvor zu speichern, wobei jede Kurve eine Kurve der Geschwindigkeit über der Zeit oder eine Kurve der Geschwindigkeit über der Strecke ist, wodurch die Geschwindigkeitsbefehle für einen Motor (13;14) aus den Kurven auf der Basis der verstrichenen Zeit oder auf der Basis der von dem betreffenden Arm (11;12) zurückgelegten Strecke ausgelesen werden können, und wobei die Bewegung des ersten (11) und des zweiten (12) Armes gesteuert wird, indem Winkelgeschwindigkeitsbefehle an die betreffenden Motoren (13,14) gegeben werden,
dadurch **gekennzeichnet**, daß das Verfahren die nachstehend angegebenen Schritte aufweist:
a) Einlesen von Daten, welche eine Startposition $P_i$ und eine Zielposition $P_{i+1}$ des anderen Endes des zweiten Armes (12) angeben;
b) Berechnen auf der Basis der gespeicherten Bezugsbeschleunigungskurve, der maximal zulässigen Geschwindigkeit der betreffenden Motoren (13,14) und der Startposition $P_i$, der Belastungsdreh-momente, die an den ersten und den zweiten Motor (13,14) während der Beschleunigung des anderen Endes des zweiten Armes (12) angelegt werden, wenn dieses sich von der Position $P_i$ in Richtung gegen die Position $P_{i+1}$ bewegt;
c) Ausgeben von Geschwindigkeitsbefehlen an die Motoren (13,14) entsprechend den Werten, die aus der gespeicherten Bezugsbeschleunigungskurve ausgelesen sind, wenn im Schritt (b) gefunden wird, daß beide Motoren (13,14) innerhalb ihrer betreffenden maximal zulässigen Belastungsdrehmomente arbeiten, jedoch einer von ihnen sehr nahe seines maximal zulässigen Belastungsdrehmomentes arbeitet;
d) Wiederholen des Schritts (b), wenn in diesem Schritt gefunden wird, daß kein Motor (13;14) nahe seines maximal zulässigen Belastungsdrehmoments arbeitet, und zwar nicht unter Verwendung der gespeicherten Bezugsbeschleunigungskurve, sondern einer modifizierten Beschleunigungskurve, die erhalten wird durch Komprimieren oder Ausdehnen der Zeitachse oder der Streckenachse der gespeicherten Bezugsbeschleunigungskurve;
e) Ausgeben von Geschwindigkeitsbefehlen an die Motoren (13,14) auf der Basis der modifizierten Beschleunigungskurve, wenn im Schritt (d) gefunden wird, daß beide Motoren (13,14) innerhalb ihrer maximal zulässigen Belastungsdrehmomente arbeiten, jedoch einer der Motoren (13;14) sehr nahe seines maximal zulässigen Belastungsdrehmoments arbeitet;
f) Berechnen auf der Basis der gespeicherten Verzögerungskurve, der maximal zulässigen Geschwindigkeit der betreffenden Motoren (13,14) und auf der Zielposition $P_{i+1}$, der Belastungsdreh-momente, die an den ersten und den zweiten Motor (13,14) während der Verzögerung des anderen Endes des zweiten Armes (12) angelegt werden, wenn dieses sich in Richtung gegen die Position $P_{i+1}$ bewegt;
g) Ausgeben von Geschwindigkeitsbefehlen an die Motoren (13,14) entsprechend den aus der gespeicherten Bezugsverzögerungskurve ausgelesenen Werten, wenn im Schritt (f) gefunden wird, daß beide Motoren (13,14) innerhalb ihrer betreffenden maximal zulässigen Belastungsdrehmomente arbeiten, jedoch einer von ihnen sehr nahe seines maximal zulässigen Belastungsdrehmoments arbeitet;

h) Wiederholen des Schritts (f), wenn in diesem Schritt gefunden wird, daß einer der Motoren (13;14) oberhalb seines maximal zulässigen Belastungsdrehmoments arbeitet, und zwar nicht unter Verwendung der gespeicherten Bezugsbeschleunigungskurve, sondern einer modifizierten Verzögerungskurve, die erhalten wird durch Komprimieren oder Ausdehnen der Zeitachse oder der Streckenachse der gespeicherten Bezugsverzögerungskurve;

i) Ausgeben von Geschwindigkeitsbefehlen an die Motoren (13,14) auf der Basis der modifizierten Verzögerungskurve, wenn im Schritt (h) gefunden wird, daß beide Motoren (13,14) innerhalb ihrer maximal zulässigen Belastungsdrehmomente arbeiten und wenigstens einer der Motoren (13;14) sehr nahe seinem maximal zulässigen Belastungsdrehmoment arbeitet.

2. Verfahren zum Steuern eines Gelenkroboters nach Anspruch 1, wobei

der erste Motor (13) einen ersten Geschwindigkeitsuntersetzer (15) und der zweite Motor (14) einen zweiten Geschwindigkeitsuntersetzer (16) aufweist und die Beschleunigungskurve und die Verzögerungskurve derart modifiziert werden, daß die Drehmomente des ersten Motors (13), des zweiten Motors (14), des ersten Untersetzers (15) und des zweiten Untersetzers (16) betreffende maximal zulässige Drehmomente nicht überschreiten.

**Revendications**

1. Procédé pour commander un robot articulé qui comprend un premier bras (11) monté de façon rotative par l'une de ses extrémités sur un corps principal par l'intermédiaire d'une première articulation, un second bras (12) monté de façon rotative par l'une de ses extrémités sur l'autre extrémité du premier bras (11) par l'intermédiaire d'une seconde articulation, un premier et un second moteurs (13, 14) disposés respectivement à chacune desdites articulations pour faire tourner respectivement lesdits premier et second bras (11, 12), et un dispositif à mémoire (32) pour mémoriser préalablement une courbe d'accélération de référence et une courbe de décélération de référence, chaque courbe étant soit une courbe de vitesse en fonction du temps, soit une courbe de vitesse en fonction de la distance, de façon à ce que des ordres de vitesse destinés à un moteur (13;14) puissent être lus à partir desdites courbes en fonction du temps écoulé, ou en fonction de la distance parcourue par le bras respectif (11;12) le mouvement desdits premier et second bras (11,12) étant commandé par application d'ordres de vitesse angulaire aux moteurs respectifs (13,14),

caractérisé en ce que ledit procédé comprend les étapes consistant à:

a) lire les données représentatives d'une position de départ $P_i$ et d'une position cible $P_{i+1}$ de l'autre extrémité dudit second bras (12);

b) calculer, en fonction de la courbe d'accélération de référence stockée, de la vitesse admissible maximale des moteurs respectifs (13,14) et de la position de départ $P_i$, les couples de charge qui seraient imposés auxdits premier et second moteurs (13,14) lors de l'accélération de l'autre extrémité dudit second bras (12) lorsqu'il se déplace de la position $P_i$ vers la position $P_{i+1}$;

c) fournir des ordres de vitesse aux moteurs (13,14) correspondant aux valeurs lues à partir de la courbe d'accélération de référence stockée si l'on trouve à l'étape (b) que les deux moteurs (13,14) fonctionnent en deçà de leurs couples de charge admissibles maximaux respectifs mais que l'un d'entre eux fonctionne très près de son couple de charge admissible maximal;

d) répéter l'étape (b) si l'on trouve à cette étape qu'aucun des moteurs (13;14) ne fonctionne au voisinage de son couple de charge admissible maximal, en n'utilisant non pas la courbe d'accélération de référence stockée, mais une courbe d'accélération modifiée obtenue par compression ou dilatation de l'axe des temps ou des distances de la courbe d'accélération de référence stockée;

e) fournir des ordres de vitesse aux moteurs (13,14) sur la base de la courbe d'accélération modifiée lorsque l'on trouve, à l'étape (d), que les deux moteurs (13,14) fonctionneraient en deçà de leurs couples de charge admissibles maximaux, mais que l'un des moteurs (13;14) fonctionnerait très près de son couple de charge admissible maximal;

f) calculer, sur la base de la courbe de décélération stockée, de la vitesse admissible maximale des moteurs respectifs (13,14) et de la position cible $P_{i+1}$, les couples de charge qui seraient imposés auxdits premier et second moteurs (13,14) pendant la décélération de l'autre extrémité dudit second bras (12) lorsqu'il se déplace vers la position $P_{i+1}$;

g) fournir des ordres de vitesse aux moteurs (13,14) correspondant aux valeurs lues à partir de la courbe de décélération de référence stockée si l'on trouve à l'étape (f) que les deux moteurs (13,14) fonctionneraient en deçà de leur couple de charge admissibles maximaux respectifs, mais que l'un d'entre eux fonctionnerait très près de son couple de charge admissible maximal;

h) répéter l'étape (f), si l'on trouve à cette étape que l'un ou l'autre des moteurs (13;14) fonctionnerait au-delà de son couple de charge admissible maximal, en n'utilisant non pas la courbe de décélération de référence stockée mais une courbe de décélération modifiée obtenue par compression ou dilatation de l'axe des temps ou des distances de la courbe de décélération de référence stockée;

i) fournir des ordres de vitesse aux moteurs (13,14) sur la base de la courbe de décélération modifiée lorsque l'on trouve à l'étape (h) que les deux moteurs (13,14) fonctionneraient en deçà de leurs couples de charge admissibles maximaux et qu'au moins l'un des moteurs (13;14) fonctionnerait très près de son couple de charge admissible maximal.

2. Procédé pour commander un robot articulé conformément à la revendication 1, dans lequel:

ledit premier moteur (13) comprend un premier réducteur de vitesse (15) et ledit second moteur (14) comprend un second réducteur de vitesse (16), et ladite courbe d'accélération et ladite courbe de décélération sont modifiées de façon à ce que les couples dudit premier moteur (13), dudit second moteur (14), dudit premier réducteur (15) et dudit second réducteur (16), ne dépassent pas les couples admissibles maximaux respectifs.

# F I G、1

S curve

Transfer amount

Time

FIG.2

FIG.3

FIG.4

Velocity

Transfer amount

FIG.5

Velocity

Transfer amount

# FIG.6

FIG.7

FIG.8

# F I G. 9

# F I G. 10

# F I G .11

$$\text{START}$$

$$i = 0$$

①　Positional data reading of two points $P_i$, $P_{i+1}$

②Acceleration　　　　　　　　　　　　　Deceleration

Such $t_u$ is obtained by an optimizing method that $T_{1p}$, $T_{2p}$, $H_{1p}$, $H_{2p}$ in acceleration are $|T_{1p}| \leq T_{1max}$ and
$|T_{2p}| \leq T_{2max}$ and
$|H_{1p}| \leq H_{1max}$ and
$|H_{2p}| \leq H_{2max}$ and
$|T_{1max} - |T_{1p}|| < \varepsilon_1$ or
$|T_{2max} - |T_{2p}|| < \varepsilon_2$ or
$|H_{1max} - |H_{1p}|| < \varepsilon_3$ or
$|H_{2max} - |H_{2p}|| < \varepsilon_4$.

Such $t_d$ is obtained by an optimizing method that $T_{1p}$, $T_{2p}$, $H_{1p}$, $H_{2p}$ in deceleration are
$|T_{1p}| \leq T_{1max}$ and
$|T_{2p}| \leq T_{2max}$ and
$|H_{1p}| \leq H_{1max}$ and
$|H_{2p}| \leq H_{2max}$ and
$|T_{1max} - |T_{1p}|| < \varepsilon_1$ or
$|T_{2max} - |T_{2p}|| < \varepsilon_2$ or
$|H_{1max} - |H_{1p}|| < \varepsilon_3$ or
$|H_{2max} - |H_{2p}|| < \varepsilon_4$.

③　$t_{u\hat{\imath}} \leftarrow t_u$　　　　$t_{d\hat{\imath}} \leftarrow t_d$

④

Determination of acceleration curve

1) when $|\alpha| \leq 1$

$$\omega_{1i}(t) = \frac{\Delta\Theta_1}{|\Delta\Theta_1|}\omega_{1M}\, f_u\left(\frac{t}{t_{u\hat{\imath}}}\right)$$

$$\omega_{2i}(t) = \frac{\Delta\Theta_1}{|\Delta\Theta_1|}\alpha\omega_{2M}\, f_u\left(\frac{t}{t_{u\hat{\imath}}}\right)$$

11) when $|\beta| < 1$

$$\omega_{1i}(t) = \frac{\Delta\Theta_2}{|\Delta\Theta_2|}\beta\omega_{1M}\, f_u\left(\frac{t}{t_{u\hat{\imath}}}\right)$$

$$\omega_{2i}(t) = \frac{\Delta\Theta_2}{|\Delta\Theta_2|}\omega_{2M}\, f_u\left(\frac{t}{t_{u\hat{\imath}}}\right)$$

Determination of deceleration curve

1) when $|\alpha| \leq 1$

$$\omega_{1i}(t) = \frac{\Delta\Theta_1}{|\Delta\Theta_1|}\omega_{1M}\, f_d\left(\frac{t-t_s}{t_{d\hat{\imath}}}\right)$$

$$\omega_{2i}(t) = \frac{\Delta\Theta_1}{|\Delta\Theta_1|}\alpha\omega_{2M}\, f_d\left(\frac{t-t_s}{t_{d\hat{\imath}}}\right)$$

11) when $|\beta| < 1$

$$\omega_{1i}(t) = \frac{\Delta\Theta_2}{|\Delta\Theta_2|}\beta\omega_{1M}\, f_d\left(\frac{t-t_s}{t_{d\hat{\imath}}}\right)$$

$$\omega_{2i}(t) = \frac{\Delta\Theta_2}{|\Delta\Theta_2|}\omega_{2M}\, f_d\left(\frac{t-t_s}{t_{d\hat{\imath}}}\right)$$

$$i = i + 1$$

N ← $P_{i+1}$: final point ?

Y

$$\text{STOP}$$

# F I G．12

$$i = 0$$

① Positional data reading of two points $P_i$, $P_{i+1}$

② $\Theta_{2s}$, $\Theta_{2E}$, $\alpha$, $\beta$, $\Delta\Theta_1$, $\Delta\Theta_2$ are obtained

Deceleration

Acceleration

③ $|\alpha| \leq 1$  Y

$\Lambda\Theta_1 > \Theta$  Y / N

$\Lambda\Theta_2 > \Theta$  Y / N

Search $t_{\hat{u}i}(\Theta_{2sj}, \alpha_k)$ from table

Search $t_{\hat{u}i}(\Theta_{2sj}, \alpha_k)$ from table

Search $t_{\hat{u}i}(\Theta_{2sj}, \beta_k)$ from table

Search $t_{\hat{u}i}(\Theta_{2sj}, \beta_k)$ from table

④ Determination of acceleration curve

I) when $|\alpha| \leq 1$

$$\omega_{1i}(t) = \frac{\Delta\Theta_1}{|\Delta\Theta_1|}\omega_{1M}\, f_u\!\left(\frac{t}{t_{\hat{u}i}}\right)$$

$$\omega_{2i}(t) = \frac{\Delta\Theta_1}{|\Delta\Theta_1|}\alpha\omega_{2M}\, f_u\!\left(\frac{t}{t_{\hat{u}i}}\right)$$

II) when $|\beta| < 1$

$$\omega_{1i}(t) = \frac{\Delta\Theta_2}{|\Delta\Theta_2|}\beta\omega_{1M}\, f_u\!\left(\frac{t}{t_{\hat{u}i}}\right)$$

$$\omega_{2i}(t) = \frac{\Delta\Theta_2}{|\Delta\Theta_2|}\omega_{2M}\, f_u\!\left(\frac{t}{t_{\hat{u}i}}\right)$$

$$i = i + 1$$

deceleration

$P_{i+1}$: final point ?  N / Y

S T O P

F I G .13

$\theta_{2S}(8)$

$\Delta\theta_2(8)$

$\Delta\theta_1(8)$

F I G .14

$\theta_{2S}(9)=-\theta_{2S}(8)$

$\Delta\theta_2(9)=-\Delta\theta_2(8)$

$\Delta\theta_1(9)\doteq-\Delta\theta_1(8)$

# FIG.15

```
                         |α| ≤ 1
                    Y                N

      Δθ₁·θ2s ≥ 0                    Δθ₂·θ2s ≥ 0
   Y              N              Y                N

Search          Search          Search          Search
t_uî(|θ2s|j, α_k)  t_uî(|θ2s|j, α_k)  t_uî(|θ2s|j, ³k)  t_uî(|θ2s|j, ³k)
from table      from table      from table      from table
```